# EUROPÄISCHE PATENTSCHRIFT

(11) **EP 2 335 476 B1**
(45) Veröffentlichungstag und Bekanntmachung des Hinweises auf die Patenterteilung: **25.07.2012**
(21) Anmeldenummer: 10014940.0
(22) Anmeldetag: 24.11.2010
(51) Int. Cl.: A01K 27/00

(54) **Bremseinrichtung für eine Seilrolle einer mechanisch auf- und abrollbaren Leine zum Führen von Tieren**
Braking device for a rope roll of a mechanical retractable and uncoilable lead for animals
Dispositif de freinage pour un rouleau de corde d'une laisse enroulable et déroulable mécaniquement pour mener des animaux

(30) Priorität: 18.12.2009 DE 202009017125 U
(43) Veröffentlichungstag der Anmeldung: 22.06.2011
(73) Patentinhaber: Flexi-Bogdahn Technik GmbH & Co. KG, 22941 Bargteheide (DE)
(72) Erfinder: Friedrichsen, Heiko, 24635 Rickling (DE)
(74) Vertreter: Jaeschke, Rainer

(56) Entgegenhaltungen:
- DE-U1- 20 019 939
- DE-U1-202007 004 273

## Beschreibung

### Beschreibung

Die Erfindung betrifft eine Bremseinrichtung für eine Seilrolle einer mechanisch auf- und abwickelbaren Leine zum Führen von Tieren, bei welcher ein Gurt oder das Seil entgegen der Kraft einer Feder von der Seilrolle abwickelbar und aufgrund der Kraft der Feder auf die Seilrolle aufwickelbar ist, welche Bremseinrichtung eine Bremstaste umfasst, die von einer Ruheposition, in der die Seilrolle frei drehbar ist, in eine Wirkposition bewegbar ist, in der die Bremstaste ein Abwickeln des Seils von der Seilrolle sperrt, welche Bremstaste ein Oberteil, das aus dem Leinengehäuse hinausragt und eine Betätigung durch den Benutzer erlaubt, und ein Unterteil aufweist, das mit der Seilrolle zusammenwirkt und mit dem Oberteil verschwenkbar verbunden ist, wobei das Unterteil in Aufwickelrichtung des Seils verschwenkbar ist derart, dass in der Wirkposition der Bremstaste ein Abwickeln des Seils von der Seilrolle verhindert wird und ein Aufwickeln auf die Seilrolle möglich ist. Insbesondere betrifft die Erfindung eine automatische Hundeleine, so dass im Folgenden überwiegend von einer solchen Hundeleine die Rede ist, ohne dass damit eine Beschränkung verbunden sein soll. Auch ist im Folgenden überwiegend von einem Seil die Rede, aber die Leine kann auch als Gurt ausgebildet sein.

Eine derartige Bremseinrichtung ist aus der DE 20 2007 004 273 U1 der Anmelderin bekannt. Die Seilrolle weist entlang ihrem Umfang eine Vielzahl von Vorsprüngen auf, gegen die das Unterteil der Bremstaste in der niedergedrückten Lage anschlägt. Dadurch wird ein weiteres Abwickeln des Seils von der Seilrolle verhindert. In dieser niedergedrückten Lage wirkt das Unterteil reibend mit der Seilrolle zusammen, so dass das Unterteil bei einer Drehung der Seilrolle in Aufwickelrichtung verschwenkt und eine Drehung der Seilrolle in Aufwickelrichtung ermöglicht. Wird die Seilrolle wieder in Abwickelrichtung gedreht, verschwenkt das Unterteil zurück in die Blockierposition und verhindert ein weiteres Abrollen des Seils. Durch diese Maßnahme wird ein Zurückholen des Hundes erleichtert, da die Seilrolle mit niedergedrückter Bremstaste in Richtung auf den Hund bewegt werden kann, wodurch sich das Seil auf die Rolle aufwickelt. Beim anschließenden Ziehen der Hundeleine zurück wird sich die Seilrolle wieder ein wenig in Abwickelrichtung drehen, wodurch das Unterteil der Bremstaste sich in dessen Wirklage verschwenkt und ein weiteres Abwickeln des Seils von der Rolle verhindert. Durch das Vorsehen eines derartigen Reibelementes können störende Geräusche wie bei einer Sperrklinke vermieden werden.

Es hat sich gezeigt, dass der Zusammenbau einer derartigen Hundeleine mit einigen Schwierigkeiten verbunden ist. Insbesondere ist es erforderlich, den Verschiebeweg der Bremstaste in Bezug auf die Reibfläche an der Seilrolle genau einzuhalten, um eine hinreichende Reibung zwischen dem Unterteil und der Umfangsfläche zu erreichen. Auch unterliegt das Reibelement zwischen dem Unterteil und der Seilrolle einem erhöhten Verschleiß. Dabei hat sich herausgestellt, dass im Zuge der dauerhaften Benutzung und des weiter voranschreitenden Verschleißes die Gefahr besteht, dass sich das Unterteil nicht mehr ausreichend zurückschwenkt, so dass die Leine zwar vollkommen funktionstüchtig bleibt, jedoch der Rückholvorgang mit den unerwünschten Geräuschen verbunden ist.

Der Erfindung liegt die Aufgabe zugrunde, eine Bremseinrichtung der eingangs geschilderten Art für eine solche Seilrolle so auszubilden, dass bei gleicher Funktion die Geräusche beim Aufrollen der Leine zuverlässig vermieden werden.

Die Aufgabe wird gemäß der Erfindung dadurch gelöst, dass in der Wirkposition das Unterteil über Borsten einer Bürste mit der Seilrolle zusammenwirkt, um das Unterteil durch eine Drehbewegung der Seilrolle in Aufwickelrichtung so zu verschwenken, dass die Seilrolle in Aufwickelrichtung drehbar ist. Die Anordnung von Borsten zwischen dem Unterteil und der Seilrolle hat den Vorteil, dass eine genaue Fertigung der gegeneinander beweglichen Teile nicht mehr erforderlich ist. Die Borsten können ausreichend lang sein und ein Verschwenken des Unterteils in jedem Fall bewirken, auch wenn bei der Fertigung das Maß nicht genau eingehalten worden ist. Weiterhin erlaubt die Verwendung von Borsten einen gewissen Verschleiß der Reibfläche als auch der Borsten ohne Beeinflussung der Funktion, so dass ein zuverlässiger Dauerbetrieb der Rollleine möglich ist.

Das Unterteil ist über eine Schwenkachse mit dem Oberteil verbunden, die parallel zur Drehachse der Seilrolle verläuft. Durch das Niederdrücken des Oberteils in Richtung auf die Seilrolle gelangt das Unterteil in Wirkverbindung mit den Borsten. Durch die Drehung der Seilrolle in Aufwickelrichtung, also bei einer Bewegung der Rollleine auf das Tier hin, wird das Unterteil um diese Schwenkachse verschwenkt derart, dass das Unterteil nicht in Berührung mit den Vorsprüngen auf der Seilrolle gelangt. Ein Geräusch wird somit zuverlässig vermieden. Bei der Drehung der Seilrolle in entgegen gesetzter Richtung, also in Abwickelrichtung, wird das Unterteil durch die Borsten in eine Position verschwenkt, in der es in Eingriff mit den Vorsprüngen auf der Seilrolle gelangt. Ein weiteres Abwickeln wird zuverlässig verhindert.

Es kann vorgesehen werden, dass die Borsten der Bürste an dem Unterteil befestigt sind und in der Wirkposition auf einer Umfangsfläche der Seilrolle anliegen. Die Umfangsfläche kann radial nach außen weisende Vorsprünge aufweisen, rau oder glatt sein. Hierdurch wird ein zuverlässiges Verschwenken des Unterteils in die eine oder die andere Richtung gewährleistet.

Alternativ kann vorgesehen werden, dass die Borsten auf einer Umfangsfläche der Seilrolle befestigt sind und radial zur Seilrolle verlaufen. Dabei kann es zweckmäßig sein, wenn die mit den Borsten zusammenwirkende Fläche des Unterteils in Richtung auf die Umfangsfläche weisende Vorsprünge umfasst, rau oder glatt ist. Auch bei dieser Ausführungsform wird ein zuverlässiges Verschwenken des Unterteils in die gewünschte Lage erreicht.

Es kann vorgesehen werden, dass die Umfangsfläche einen geringeren Durchmesser als die Seilrolle hat und axial neben der Seilrolle verläuft. Die Umfangsfläche ist demnach auf einem kreisförmigen und sich in axialer Richtung erstreckenden Vorsprung angeordnet, der als axialer Fortsatz der Seilrolle ausgebildet ist und mit der Seilrolle dreht. Dies hat den Vorteil, dass der Durchmesser der Seilrolle nicht durch die Borsten vergrößert wird. Das Unterteil weist einen Schwenkhebel auf, der neben den seitlichen Flanken der Seilrolle, zwischen denen das Seil aufgewickelt wird, verläuft. Das Gehäuse der Rollleine braucht daher im Durchmesser nicht größer zu sein als eine herkömmliche Rollleine. Es ist lediglich erforderlich, die Breite etwas zu vergrößern, damit ausreichend Raum für die Borsten und das damit zusammenwirkende Element des Unterteils vorhanden ist. Dies ist jedoch nicht störend.

Bei der Anordnung der Borsten auf einer daneben angeordneten Umfangsfläche der Seilrolle kann zudem vorgesehen sein, dass die Borsten die äußere Umfangsfläche der Seilrolle nicht überragen. Die radialen äußeren Abmessungen des Leinengehäuses brauchen daher nicht verändert zu werden.

Die Borsten der Bürste können aus einem beliebigen Material bestehen. Es kann vorgesehen sein, dass die Borsten aus einem Kunststoffmaterial bestehen. Die Verwendung von Kunststoff hat den Vorteil, dass die Borsten relativ unempfindlich gegen eindringende Feuchtigkeit und Verschmutzungen sind. Ein zuverlässiger Betrieb der Bremseinrichtung bleibt daher möglich.

Die Borsten können gleichmäßig verteilt auf der Umfangsfläche oder dem Unterteil angeordnet sein. Es ist aber auch möglich, dass die Borsten in Bündeln auf der Umfangsfläche oder dem Unterteil angeordnet sind. Durch beide Maßnahmen wird ein sicheres Verschwenken des Unterteils in die eine oder die andere Richtung bewirkt. Die auf dem Unterteil angeordneten Borsten erstrecken sich im Wesentlichen in Richtung auf die Drehachse der Seilrolle. Damit können die Borsten gut mit der Umfangsfläche an der Seilrolle zusammenwirken.

Auch ist es möglich, dass die Umfangsfläche und das Unterteil miteinander zugekehrten und zusammenwirkenden Borsten versehen sind. Auch hierdurch wird ein sicheres Verschwenken des Unterteils am Oberteil bewirkt.

Gemäß einer weitergehenden Ausführungsform der Erfindung ist vorgesehen, dass das Oberteil mit dem Unterteil bis zu einem Anschlag in die Wirkposition bewegbar ist. Hierdurch wird sichergestellt, dass das Unterteil in einem solchen Abstand zur Seilrolle gehalten wird, dass ein Verschwenken des Unterteils zwischen den beiden Positionen möglich ist.

Hierbei kann vorgesehen sein, dass der Anschlag als Druckpunkt ausgebildet ist, der durch Aufbringen einer vorbestimmten Kraft überwindbar ist, so dass das Unterteil oder ein damit oder dem Oberteil verbundenes Blockierelement die Seilrolle sowohl in Abwickel- als auch in Aufwickelrichtung blockiert. Ein solcher Druckpunkt ist aus der eingangs erwähnten DE 20 2007 004 273 U1 bekannt und bedarf daher keiner weiteren Erläuterung. In dieser Position wird die Seilrolle in beiden Drehrichtungen blockiert. Die Leine weist daher die eingestellte Länge auf.

Es kann weiterhin vorgesehen werden, dass die Bremstaste in der Wirkposition durch einen Arretierhebel gehalten ist. Der Arretierhebel blockiert in seiner wirksamen Lage auch die Seilrolle in Aufwickelrichtung. Dadurch wird das Seil in der ausgezogenen Länge zuverlässig gehalten, ohne dass die Bremstaste andauernd durch den Benutzer niedergedrückt werden muss.

Die Erfindung und die Wirkungsweise der Bremseinrichtung wird im Folgenden anhand der schematischen Zeichnung näher erläutert. Es zeigen:
- Figur 1 a bis c: die Seilrolle und die Bremstaste von beiden Seiten (a, c) und der Frontansicht (b) in der Ruheposition,
- Figur 2 a bis c: die Seilrolle bei niedergedrückter Bremstaste und mit dem Unterteil in Wirkposition,
- Figur 3 a bis c: die Darstellung gem. Figur 2, jedoch mit verschenktem Unterteil und
- Figur 4 a bis c: die Seilrolle bei vollständig niedergedrückter Bremstaste.

Die in der Zeichnung dargestellte Leine zum Führen von Tieren weist eine Seilrolle 11 auf, die entgegen der Kraft einer Feder in Abwickelrichtung 12 drehbar ist, wodurch sich das nicht gezeigte Seil von der Rolle 11 abwickelt. Es ist eine Bremstaste 13 vorgesehen, die hin-und her verschiebbar in einem in der Zeichnung nicht dargestellten Gehäuse gelagert ist. Mit dieser Bremstaste 13 kann die Seilrolle in Abwickelrichtung und auch in Aufwickelrichtung blockiert werden.

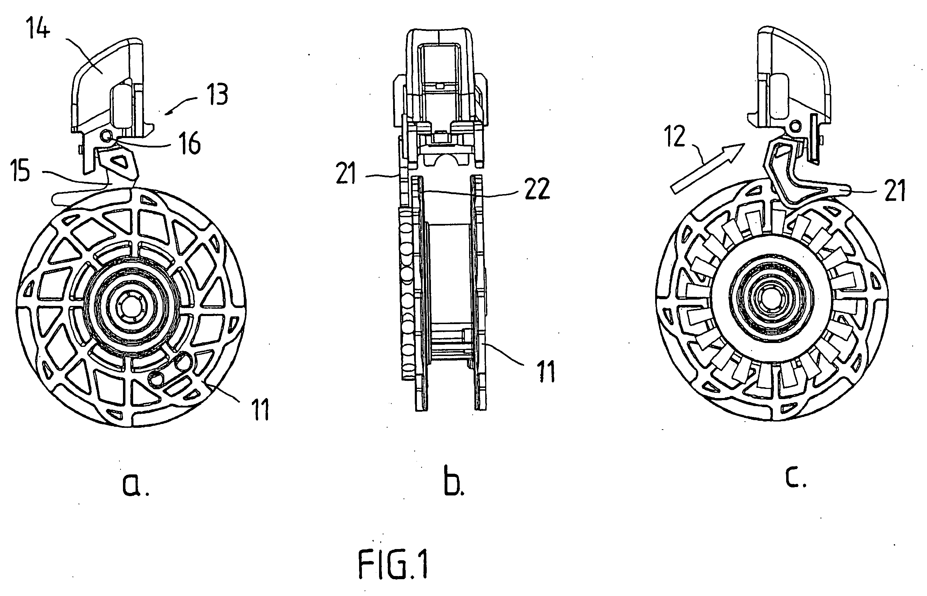

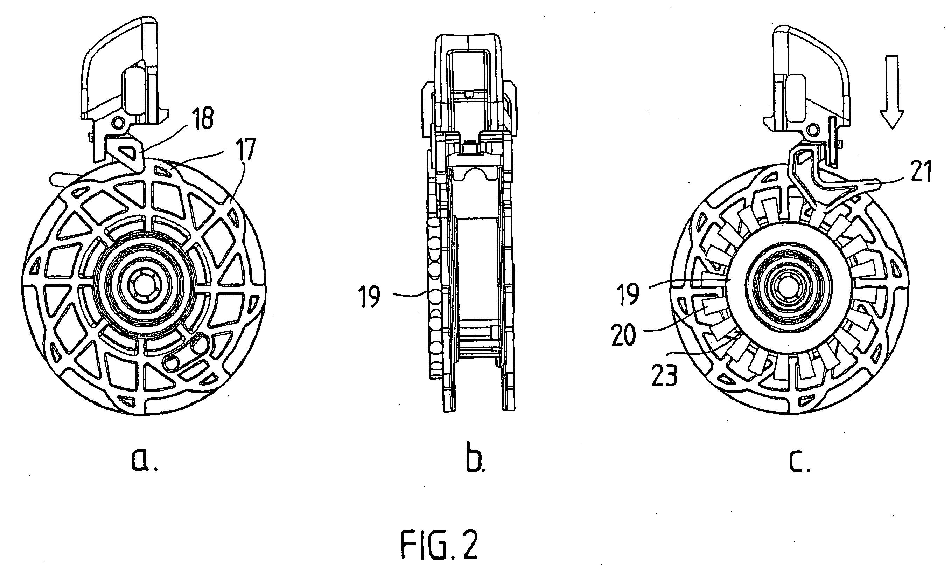

Die Bremstaste 13 weist ein Oberteil 14 auf, das in der zusammengebauten Lage der Leine aus dem Leinengehäuse hinausragt und eine Betätigung durch den Benutzer erlaubt. Es ist weiterhin ein Unterteil 15 vorgesehen, das verschwenkbar über eine Schwenkachse 16 mit dem Oberteil 14 der Bremstaste 13 verbunden ist. Im Einzelnen ist die Anordnung so getroffen, dass das Unterteil mit Vorsprüngen 17 an den seitlichen Flanken 22 der Seilrolle 11 zusammenwirkt, um bei der in Figur 2 gezeigten Lage ein Drehen in Abwickelrichtung zu verhindern. Bei der in Figur 1 gezeigten Ruheposition kann das Unterteil mit seiner Rastnase 18 nicht in Eingriff mit den Vorsprüngen 17 gelangen, so dass die Seilrolle in beiden Drehrichtungen drehbar ist.

Die Seilrolle 11 weist ferner eine Bürste 19 auf, deren Borsten 20 mit einem Fortsatz 21 des Unterteils 15 zusammenwirken. Der Fortsatz 21 erstreckt sich dabei seitlich neben dem seitlichen Begrenzungsflanken 22 der Seilrolle 11. Die Bürste 19 ist auf einem drehfest mit der Seilrolle verbundenen axialen Vorsprung der Seilrolle angeordnet, auf dessen Umfangsfläche 23 die Borsten 20 befestigt sind. Die Borsten 20 erstrecken sich dabei in radialer Richtung der Seilrolle. Der Fortsatz und die Seilrolle können einstückig miteinander verbunden sein.

In der in Figur 1 gezeigten Ruheposition befindet sich sowohl das Unterteil 15 und dessen Rastnase 18 als auch der Fortsatz 21 außer Eingriff mit der Seilrolle 11 oder der Bürste 19. In der in Figur 2 gezeigten Wirkposition bei niedergedrückter Bremstaste kann die Rolle nicht mehr in Abwickelrichtung 12 gedreht werden, da die Rastnase 18 gegen den Vorsprung 17 anschlägt.

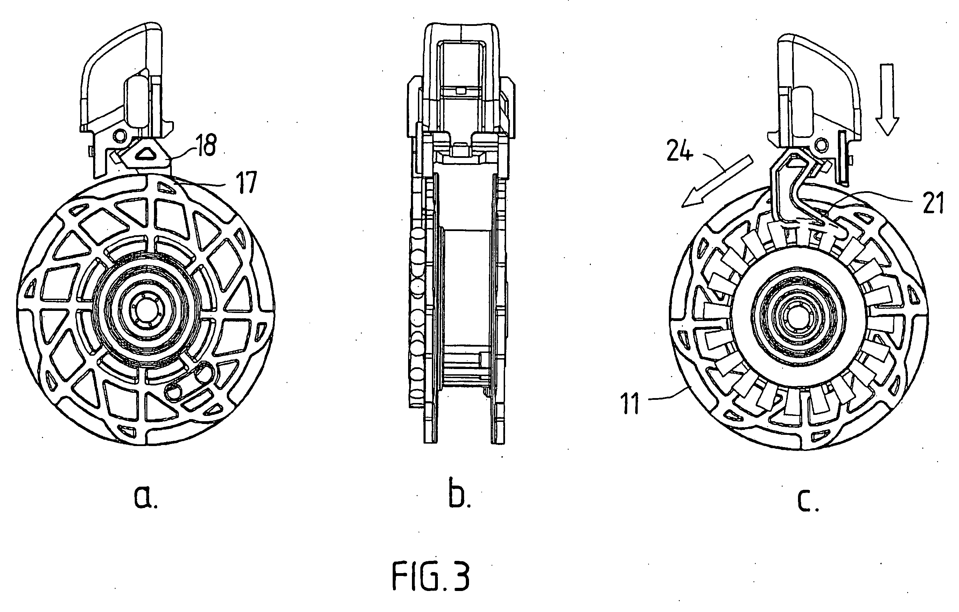

Bei der in Figur 3 gezeigten Wirklage der Bremstaste dreht sich die Seilrolle in Aufwickelrichtung 24. Der Fortsatz 21 ist in die Borsten 20 der Bürste 19 eingetaucht und bewirkt dadurch ein Verschwenken des Unterteils 15 in eine Lage, in der die Rastnase 18 nicht in Eingriff mit den Vorsprüngen 17 der Seilrolle 11 gelangen kann. Die Seilrolle ist demnach in Aufwickelrichtung 24 frei drehbar. In dieser Position kann sich das Seil ohne Geräusche auf die Seilrolle aufgrund der Federkraft aufwickeln.

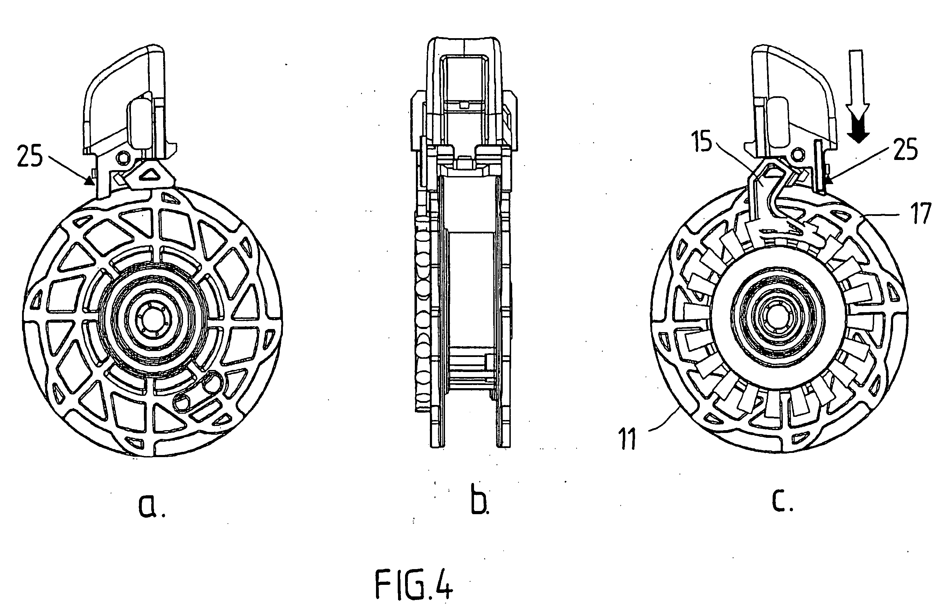

In der Figur 4 ist die Lage der Bremstaste gezeigt, in der die Seilrolle sowohl in der Aufwickelrichtung als auch in der Abwickelrichtung blockiert ist. Es ist ein Druckpunkt vorgesehen, über den die Bremstaste aus der in den Figuren 2 und 3 gezeigten Wirkposition hinaus in Richtung auf die Seilrolle gedrückt werden muss. Hierdurch taucht der Fortsatz 21 des Unterteils 15 weiter in die Borsten ein, was aufgrund der Elastizität der Borsten möglich ist. Gleichzeitig gelangt ein Blockierelement 25, das mit dem Unterteil 15 verbunden ist, in Eingriff mit den Vorsprüngen 17 der Seilrolle 11. Dieses Blockierelement 25 ist fest mit dem Oberteil verbunden, so dass die Drehung der Seilrolle sowohl in Aufwickelrichtung 24 als auch in Abwickelrichtung 12 zuverlässig verhindert wird.

Es können nicht gezeigte Arretiermittel vorhanden sein, um die Bremstaste in der Wirkposition zu halten. Derartige Arretierhebel sind beispielsweise aus der DE 298 04 615 U1 der Anmelderin bekannt und bedürfen daher keiner weiteren Erläuterung. Die Arretiermittel greifen in der Arretierlage ebenfalls in die Vorsprünge 17 der Seilrolle 11 ein, um ein weiteres Aufwickeln zu verhindern. Dann kann die Leine zum Führen des Tieres mit einer vorbestimmten und festlegbaren Leinenlänge benutzt werden.

Die den Borsten zugewandte Fläche des Fortsatzes 21 des Unterteils weist eine Fläche auf, die sich in Umfangsrichtung über zwei oder mehrere Borstenbündel 20 der Bürste erstreckt. Damit wird ein sicheres hin- und herschwenken des Unterteils in Abhängigkeit von der Drehrichtung der Seilrolle gewährleistet. Insbesondere werden Pendelbewegungen des Unterteils vermieden, da stets mehrere Borsten oder Borstenbündel an dem Unterteil eingreifen und sicher in der verschwenkten Lage halten.

## Patentansprüche

1. Bremseinrichtung für eine Seilrolle einer mechanisch auf- und abwickelbaren Leine zum Führen von Tieren, bei welcher das Seil entgegen der Kraft einer Feder von der Seilrolle (11) abwickelbar und aufgrund der Kraft der Feder auf die Seilrolle aufwickelbar ist, welche Bremseinrichtung eine Bremstaste (13) umfasst, die von einer Ruheposition (Fig. 1), in der die Seilrolle (11) frei drehbar ist, in eine Wirkposition (Fig. 2) bewegbar ist, in der die Bremstaste ein Abwickeln des Seils von der Seilrolle sperrt, welche Bremstaste ein Oberteil (14), das aus dem Leinengehäuse hinausragt und eine Betätigung durch den Benutzer erlaubt, und ein Unterteil (15) aufweist, das mit der Seilrolle zusammenwirkt und mit dem Oberteil verschwenkbar verbunden ist, wobei das Unterteil in Aufwickelrichtung (12) des Seils verschwenkbar ist derart, dass in der Wirkposition der Bremstaste ein Abwickeln des Seils von der Seilrolle verhindert wird und ein Aufwickeln auf die Seilrolle möglich ist, **dadurch gekennzeichnet, dass** in der Wirkposition das Unterteil (15) über Borsten (20) einer Bürste (19) mit der Seilrolle (11) zusammenwirkt, um das Unterteil (15) durch eine Drehbewegung der Seilrolle in Aufwickelrichtung so zu verschwenken, dass die Seilrolle in Aufwickelrichtung drehbar ist.

2. Bremseinrichtung nach Anspruch 1, **dadurch gekennzeichnet, dass** die Borsten der Bürste an dem Unterteil befestigt sind und in der Wirkposition auf einer Umfangsfläche der Seilrolle anliegen.

3. Bremseinrichtung nach Anspruch 2, **dadurch gekennzeichnet, dass** die Umfangsfläche radial nach außen weisende Vorsprünge aufweist, rau oder glatt ist.

4. Bremseinrichtung nach Anspruch 1, **dadurch gekennzeichnet, dass** die Borsten (20) auf einer Umfangsfläche (23) der Seilrolle befestigt sind und radial zur Seilrolle verlaufen.

5. Bremseinrichtung nach Anspruch 4, **dadurch gekennzeichnet, dass** die mit den Borsten zusammenwirkende Fläche des Unterteils in Richtung auf die Umfangsfläche weisende Vorsprünge umfasst, rau oder glatt ist.

6. Bremseinrichtung nach Anspruch 2 oder 4, **dadurch gekennzeichnet, dass** die Umfangsfläche (23) einen geringeren Durchmesser als die Seilrolle (11) hat und axial neben der Seilrolle verläuft.

7. Bremseinrichtung nach einem der Ansprüche 4 bis 6, **dadurch gekennzeichnet, dass** die Borsten (20) die äußere Umfangsfläche der Seilrolle (11) nicht überragen.

8. Bremseinrichtung nach einem der Ansprüche 1 bis 7, **dadurch gekennzeichnet, dass** die Borsten aus einem Kunststoffmaterial bestehen.

9. Bremseinrichtung nach einem der Ansprüche 1 bis 8, **dadurch gekennzeichnet, dass** die Borsten gleichmäßig verteilt auf der Umfangsfläche (23) oder dem Unterteil angeordnet sind.

10. Bremseinrichtung nach einem der Ansprüche 1 bis 9, **dadurch gekennzeichnet, dass** die Borsten in Bündeln (20) auf der Umfangsfläche oder dem Unterteil angeordnet sind.

11. Bremseinrichtung nach einem der Ansprüche 1 bis 10, **dadurch gekennzeichnet, dass** die Umfangsfläche und das Unterteil mit einander zugekehrten und zusammenwirkenden Borsten versehen sind.

12. Bremseinrichtung nach einem der Ansprüche 1 bis 11, **dadurch gekennzeichnet, dass** das Oberteil mit dem Unterteil bis zu einem Anschlag in die Wirkposition bewegbar sind.

13. Bremseinrichtung nach Anspruch 12, **dadurch gekennzeichnet, dass** der Anschlag als Druckpunkt ausgebildet ist, der durch Aufbringen einer vorbestimmten Kraft überwindbar ist, so dass das Unterteil oder ein mit dem Oberteil verbundenes Blockierelement die Seilrolle sowohl in Abwickel- als auch in Aufwickelrichtung blockiert.

14. Bremseinrichtung nach einem der Ansprüche 1 bis 13, **dadurch gekennzeichnet, dass** die Bremstaste in der Wirkposition durch einen Arretierhebel gehalten ist.

15. Bremseinrichtung nach Anspruch 14, **dadurch gekennzeichnet, dass** der Arretierhebel in seiner wirksamen Lage die Seilrolle in Aufwickelrichtung blockiert.

## Claims

1. Braking device for a cord reel of a lead that can be mechanically reeled in and reeled out for the leading of animals, in which the cord can be reeled out from the cord reel (11) against the force of a spring and reeled in onto the cord reel using the force of the spring, said braking device including a brake button (13), which can be moved from a resting position (Fig. 1), in which the cord reel (11) is freely rotatable, to an active position (Fig. 2) in which the brake button locks the cord from reeling out from the cord reel. The brake button displays an upper part (14), which projects from the lead housing and allows activation by the user, and a lower part (15), which interacts with the cord reel and is connected by an articulation with the upper part, wherein the lower part can be articulated in the reeling-in direction (12) of the cord in such a manner that, in the active position of the brake button, reeling out of the cord from the cord reel is prevented and reeling in onto the cord reel is possible, **characterised in that** in the active position the lower part (15) interacts via bristles (20) of a brush (19) with the cord reel (11) in order to articulate the lower part (15) via a rotational movement of the cord reel in the reeling-in direction, in such a manner that the cord reel can be rotated in the reeling-in direction.

2. Braking device according to Claim 1, **characterised in that** the bristles of the brush on the lower part are fixed to the lower part and in the active position lie against a circumferential surface of the cord reel.

3. Braking device according to Claim 2, **characterised in that** the circumferential surface displays outward-pointing protrusions radially, is rough or smooth.

4. Braking device according to Claim 1, **characterised in that** the bristles (20) are fixed to a circumferential surface (23) of the cord reel and extend radially to the cord reel.

5. Braking device according to Claim 4, **characterised in that** the surface of the lower part which interacts with the bristles comprises protrusions pointing in the direction of the circumferential surface, is rough or smooth.

6. Braking device according to Claim 2 or 4, **characterised in that** the circumferential surface (23) has a smaller diameter than the cord reel (11) and extends axially next to the cord reel.

7. Braking device according to one of Claims 4 to 6, **characterised in that** the bristles (20) do not project beyond the outer circumferential surface of the cord reel (11).

8. Braking device according to one of Claims 1 to 7, **characterised in that** the bristles consist of a plastic material.

9. Braking device according to one of Claims 1 to 8, **characterised in that** the bristles are arranged equally distributed over the circumferential surface (23) or the lower part.

10. Braking device according to one of Claims 1 to 9, **characterised in that** the bristles are arranged in bundles (20) on the circumferential surface or the lower part.

11. Braking device according to one of Claims 1 to 10, **characterised in that** the circumferential surface and the lower part are provided with reciprocally facing and interacting bristles.

12. Braking device according to one of Claims 1 to 11, **characterised in that** the upper part can be moved with the lower part into the active position as far as an end stop.

13. Braking device according to Claim 12, **characterised in that** the end stop is configured as a pressure point which may be overridden by applying a predetermined force, so that the lower part, or a locking element connected with the upper part, locks the cord reel both in the reeling-out and reeling-in direction.

14. Braking device according to one of Claims 1 to 13, **characterised in that** the brake button is held in the active position by a locking lever.

15. Braking device according to Claim 14, **characterised in that** the locking lever in its active position locks the cord reel in the reeling-in direction.

## Revendications

1. Dispositif de freinage pour un rouleau de cordage d'une laisse enroulable et déroulable mécaniquement pour mener des animaux, dans lequel le cordage peut être déroulé du rouleau de cordage (11) contre la force d'un ressort et peut être enroulé sur le rouleau de cordage sous l'action de la force de ce ressort, ce dispositif de freinage comportant une touche de freinage (13) pouvant être déplacée d'une position de repos (figure 1) dans laquelle le rouleau de cordage (11) est librement mobile en rotation dans une position active (figure 2) dans laquelle la touche de freinage bloque le déroulement du cordage du rouleau de cordage, cette touche de freinage comportant une partie supérieure (14) faisant saillie à l'extérieur du boîtier de la laisse et permettant l'actionnement de cette touche par un utilisateur et une partie inférieure (15) qui coopère avec le rouleau de cordage et qui est reliée en étant mobile en pivotement avec la partie supérieure, la partie inférieure étant susceptible de pivoter dans la direction d'enroulement (12) du cordage de sorte que, lorsque la touche de freinage est en position active, un déroulement du cordage du rouleau de cordage soit empêché alors qu'un enroulement sur le rouleau de cordage est possible,
dispositif de freinage **caractérisé en ce que**
dans la position active, la partie inférieure (15) coopère avec le rouleau de cordage (11) par l'intermédiaire des poils (20) d'une brosse (19) pour faire pivoter la partie inférieure (15) suite à une rotation du rouleau de cordage dans la direction d'enroulement de sorte que le rouleau de cordage puisse tourner dans la direction d'enroulement.

2. Dispositif de freinage conforme à la revendication 1,
**caractérisé en ce que**
les poils de la brosse sont fixés à la partie inférieure et s'appliquent sur une surface périphérique du rouleau de cordage dans la position active.

3. Dispositif de freinage conforme à la revendication 2,
**caractérisé en ce que**
la surface périphérique comporte des saillies dirigées radialement vers l'extérieur, est lisse ou est rugueuse.

4. Dispositif de freinage conforme à la revendication 1,
**caractérisé en ce que**
les poils (20) sont fixés sur une surface périphérique (23) du rouleau de cordage et s'étendent radialement par rapport à ce rouleau.

5. Dispositif de freinage conforme à la revendication 4,
**caractérisé en ce que**
la surface de la partie inférieure qui coopère avec les poils, comporte des saillies s'étendant en direction de la surface périphérique, est rugueuse ou est lisse.

6. Dispositif de freinage conforme à la revendication 2 ou 4,
**caractérisé en ce que**
la surface périphérique (23) a un diamètre inférieur à celui du rouleau de cordage (11) et s'étend axialement à proximité de ce rouleau de cordage.

7. Dispositif de freinage conforme à l'une des revendications 4 à 6,
**caractérisé en ce que**
les poils (20) ne dépassent pas de la surface périphérique extérieure du rouleau de cordage (11).

8. Dispositif de freinage conforme à l'une des revendications 1 à 7,
**caractérisé en ce que**
les poils sont réalisés en un matériau synthétique.

9. Dispositif de freinage conforme à l'une des revendications 1 à 8,
**caractérisé en ce que**
les poils sont disposés en étant répartis uniformément sur la surface périphérique (23) ou sur la partie inférieure.

10. Dispositif de freinage conforme à l'une des revendications 1 à 9,
**caractérisé en ce que**
les poils sont disposés en touffes (20) sur la surface périphérique ou la partie inférieure.

11. Dispositif de freinage conforme à l'une des revendications 1 à 10,
**caractérisé en ce que**
la surface périphérique et la partie inférieure sont équipées de poils se faisant face et coopérant entre eux.

12. Dispositif de freinage conforme à l'une des revendications 1 à 11,
**caractérisé en ce que**
la partie supérieure peut être déplacée avec la partie inférieure jusqu'à une butée dans la position active.

13. Dispositif de freinage conforme à la revendication 12,
**caractérisé en ce que**
la butée est réalisée sous la forme d'un point de poussée pouvant être dépassé suite à l'application d'une force prédéfinie de sorte que la partie inférieure ou un élément de blocage lié à la partie inférieure bloque le rouleau de cordage aussi bien dans la direction d'enroulement que dans la direction de déroulement.

14. Dispositif de freinage conforme à l'une des revendications 1 à 13,
**caractérisé en ce que**
la touche de freinage est maintenue dans la position active par un levier d'arrêt.

15. Dispositif de freinage conforme à la revendication 14,
**caractérisé en ce que**
le levier d'arrêt bloque le rouleau de cordage dans la direction d'enroulement dans sa position active.
